Europäisches Patentamt

European Patent Office

Office européen des brevets

(19)

(11) **EP 0 605 542 B1**

(12) **EUROPÄISCHE PATENTSCHRIFT**

(45) Veröffentlichungstag und Bekanntmachung des Hinweises auf die Patenterteilung:
**05.01.2000 Patentblatt 2000/01**

(51) Int Cl.⁷: **G10K 11/16**, F02C 7/24

(21) Anmeldenummer: **92920024.4**

(86) Internationale Anmeldenummer:
**PCT/EP92/02156**

(22) Anmeldetag: **18.09.1992**

(87) Internationale Veröffentlichungsnummer:
**WO 93/06588 (01.04.1993 Gazette 1993/09)**

(54) **FLUIDDURCHSTRÖMTER SCHALLDÄMPFER**

NOISE DAMPER WITH FLUID FLOWING THROUGH IT

SILENCIEUX PARCOURU PAR UN FLUIDE

(84) Benannte Vertragsstaaten:
**DE FR GB IT**

(30) Priorität: **24.09.1991 DE 4131777**

(43) Veröffentlichungstag der Anmeldung:
**13.07.1994 Patentblatt 1994/28**

(73) Patentinhaber: **Linde Aktiengesellschaft**
**65189 Wiesbaden (DE)**

(72) Erfinder:
 • ZINK, Dieter
  **D-8190 Wolfratshausen (DE)**
 • STÜBER, Burkhard
  **D-8034 Germering (DE)**

(74) Vertreter: **Kasseckert, Rainer**
**Linde Aktiengesellschaft,**
**Zentrale Patentabteilung**
**82049 Höllriegelskreuth (DE)**

(56) Entgegenhaltungen:
 WO-A-91/01034        DE-A- 2 112 393
 DE-A- 2 748 767       FR-A- 1 166 394
 FR-A- 2 201 010       US-A- 3 507 355

 • **THE DESIGN AND PERFORMANCE ANALYSIS OF COMPACT HEAT EXCHANGERS Vol. 1, Theory and Practice of Design NORTHERN RESEARCH AND ENGINEERING CORPORATION Cambridge, Massachusets London, England**

**Beschreibung**

Die Erfindung betrifft einen Schalldämpfer, der von einem Fluid durchströmt wird und ein Gehäuse und schallabsorbierende Einbauten aufweist, wobei die schallabsorbierenden Einbauten gewellte Bleche enthalten.

In verfahrenstechnischen Anlagen befinden sich häufig Quellen von hohen Lärmemissionen, beispielsweise Maschinen wie Entspannungsturbinen oder Verdichter. Insbesondere in der Beschaufelung von Entspannungsturbinen werden schmalbandige Lärmpegel erzeugt, die ohne Dämpfung über Ein- und Austrittsleitungen übertragen und weiter über angeschlossene Stahlkonstruktionen nach außen abgestrahlt werden. Diese akustischen Emissionen, die zu einem großen Teil über das solche Maschinen durchströmende Fluid weitergeleitet werden, müssen auf ein erträgliches Maß reduziert werden. Neben konstruktiven Maßnahmen an den Maschinen selbst, die nur begrenzte Wirksamkeit entfalten, sind dazu Schalldämpfer geeignet, die am Austritt und/oder am Eintritt der Maschine angeflanscht werden.

Bisher bekannte Schalldämpfer der eingangs genannten Art enthalten faserige Materialien als schalldämmende Einbauten. Solche Vorrichtungen ergeben zwar eine in vielen Fällen befriedigende Schallabsorption, allerdings treten im praktischen Betrieb auch Nachteile auf. Die bekannten Schalldämpfer eignen sich nämlich nur für bestimmte Verfahrensbedingungen, insbesondere bezüglich des Aggregatzustandes des Fluids und der Betriebstemperatur sind ihrem Einsatz Grenzen gesetzt. Sie arbeiten daher in vielen Einsatzbereichen nicht vollständig zufriedenstellend, vor allem hinsichtlich der Ausfallsicherheit der Anlage und im Blick auf die Flexibilität der Verfahrensführung.

So haben faserige Absorptionsmaterialien durch das Einwirken tiefer Temperaturen, wie sie beispielsweise an Entspannungsturbinen in Tieftemperatur-Luftzerlegungsaniagen auftreten, Auflösungserscheinungen gezeigt und zu Schäden in den Entspannungsturbinen geführt. Außerdem wird beim Auftreten von Flüssigkeit, etwa bei Entspannung ins Naßdampfgebiet, die Flüssigphase von faserigen Materialien teilweise aufgesaugt und die Dämpfungswirkung wird stark vermindert.

Aus FR-A-2201010 ist ein Schalldämpfer für Turbinenantriebe bekannt, dessen schallabsorbierende Einbauten gewellte Bleche enthalten.

Der Erfindung liegt die Aufgabe zugrunde, einen Schalldämpfer der eingangs genannten Art zu entwickeln, der wirtschaftlich besonders vorteilhaft ist, insbesondere durch hohe Ausfallsicherheit, geringen Verschleiß und flexible Einsatzmöglichkeiten.

Diese Aufgabe wird dadurch gelöst, daß mehrere schallabsorbierende Einbauten in Strömungsrichtung angeordnet sind, und daß die gewellten Bleche aus geschnittenen parallelen Streifen gewellten Bleches bestehen, wobei die Wellungen zweier benachbarter Streifen paarweise versetzt sind, so daß sich zwischen den Flanken spaltförmige Öffnungen befinden, die eine akustische Verbindung zwischen den beiden Teilräumen oberhalb und unterhalb des Bleches darstellen.

Dafür kommen vor allem gefaltete Aluminiumfolien in Frage, wie sie bereits in anderen Bereichen der Verfahrenstechnik als Einbauten eingesetzt werden, beispielsweise in Stoffaustauschkolonnen, Wärmetauschern und ähnlichen Apparaten. Sie sind leicht und kostengünstig herzustellen und weisen die angeführten Nachteile von faserigen Materialien nicht auf. Insbesondere sind sie auch im Tieftemperaturbereich stabil und saugen Flüssigkeit nicht auf. Der erfindungsgemäße Schalldämpfer kann daher mit einem außerordentlich weiten Anwendungsbereich aufwarten und ist beispielsweise auch im kalten Teil einer Luftzerlegungsanlage einsetzbar, etwa am Eintritt und/oder Austritt einer Entspannungsturbine. Auch für den Fall, daß das Fluid flüssige Anteile enthält, treten im Gegensatz zu den bekannten Schalldämpfern keine Schwierigkeiten auf, da der erfindungsgemäße Schalldämpfer ohne Absorptionsfasern hergestellt wird.

Ausführliche Berechnungen und umfangreiche Messungen haben gezeigt, daß der erfindungsgemäße Schalldämpfer eine hohe Absorptionswirkung aufweist, die mindestens derjenigen der vorbekannten Vorrichtungen entspricht. Insbesondere schmalbandige Schallemissionen können außerordentlich wirksam gedämpft werden.

Bei der Erfindung werden gewellte Blechen verwendet, die jeweils aus mehreren in Strömungsrichtung hintereinander angeordneten parallelen Streifen bestehen. Die Wellen zweier benachbarten Streifen sind gegeneinander versetzt, so daß zwischen jeweils zwei benachbarten Streifen spaltförmige Öffnungen vorhanden sind.

Solche Bleche, auch als geschnittene Fins bezeichnet, werden in großen Mengen und in großer Vielfalt für den Bau von Aluminium-Plattenwärmetauschern hergestellt und sind daher problemlos und kostengünstig zu beschaffen. Es hat sich gezeigt, daß diese Form besonders gut zur Schallabsorption in einem erfindungsgemäßen Schalldämpfer geeignet ist.

Je nach speziellem Einsatz des Schalldämpfers können gelochte oder ungelochte Bleche mit Vorteil verwendet werden. Auch der kombinierte Einsatz von verschiedenen Blechen ist möglich.

Vorzugsweise werden die gewellten Bleche der schallabsorbierenden Einbauten so angeordnet, daß die Wellenberge und -täler im wesentlichen senkrecht zur Strömungsrichtung des Fluids verlaufen. Damit erreicht man innerhalb der schallabsorbierenden Einbauten einen hohen Strömungswiderstand in Strömungsrichtung und einen niedrigen Strömungswiderstand in einer dazu senkrechten Richtung.

Gemäß einer Weiterbildung der Erfindung ist die Amplitude der Wellen des Blechs auf die Schallwellenlänge abgestimmt. Dabei wird der Abstand zwischen Wellenbergen und -tälern ungefähr gleich einem Viertel der Wellenlänge des zu absorbierenden Schalls gewählt. In der Praxis haben sich geringfügige Abweichungen des Absorptionsmaximums von diesem theoretischen Wert ergeben, die genaue Abstimmung erfolgt anhand von Absorptionsmessungen.

Vorzugsweise werden die schallabsorbierenden Einbauten von mehreren parallel zueinander angeordneten Kulissen gebildet. Dabei sind die gewellten Bleche innerhalb von ebenen Kulissen angeordnet, die in der Regel jeweils zwei Deckplatten aufweisen, zwischen denen ein oder mehrere gewellte Bleche angeordnet sind.

Mindestens eine der beiden Deckplatten einer Kulisse weist Öffnungen auf, um den Schall ins Innere der Kulisse, das heißt zu dem oder den gewellten Blechen einzuleiten. Wenn eine Kulisse mehr als ein gewelltes Blech enthält, kann es trotzdem ausreichen, eine der beiden Deckplatten schalldurchlässig auszubilden. In diesem Fall dürfen zwischen jeweils zwei gewellten Blechen keine schallundurchlässigen Einbauten vorhanden sein, sondern lediglich durchlässige Trenngitter, beispielsweise Drahtgewebe.

Besonders günstig ist es jedoch, wenn in Weiterbildung des Erfindungsgedankens zwischen den Deckplatten einer Kulisse zwei gewellte Bleche und zwischen den beiden gewellten Blechen einer Kulisse eine im wesentlichen schallundurchlässige Trennplatte angeordnet sind. Die Trennplatte kann in diesem Fall aus einem massiven Blech mit entsprechender Stabilität bestehen. Es ist vorteilhaft, wenn bei dieser Variante des erfindungsgemäßen Schalldämpfers beide Deckbleche schalldurchlässig ausgebildet sind, beispielsweise durch die Verwendung von Lochblechen.

Die beiden Deckplatten einer Kulisse können durch Niet-, Schraub-, Schweiß- oder ähnliche Verbindungen verbunden sein. Als besonders vorteilhaft hat es sich jedoch erwiesen, die beiden Deckplatten und das oder die gewellten Bleche einer Kulisse miteinander zu verlöten. Mit dieser Technik kann an jedem Berührungspunkt der Bauteile eine kraftschlüssige Verbindung hergestellt werden. Somit weisen die Kulissen extrem hohe Steifigkeit auf und können auch bei hohen Strömungsgeschwindigkeiten nicht ins Schwingen geraten.

Die Kulissen können grundsätzlich direkt in den Schalldämpfer eingebaut, das heißt direkt mit dem Gehäuse verbunden werden. Dies ist insbesondere bei beengten Platzverhältnissen vorteilhaft, da der gesamte Innenraum des Gehäuses zur Bedämpfung ausgenutzt werden kann. Da das Gehäuse in der Regel in etwa zylinderförmig ausgebildet ist, müssen jedoch die - zunächst quaderförmigen - Kulissen in ihren Höhenabmessungen einzeln entsprechend zugeschnitten und an den oberen und unteren Kanten abgeschrägt werden, um in das runde Gehäuse eingepaßt werden zu können. Dies bedingt einen relativ hohen Herstellungsaufwand.

Falls genügend Platz vorhanden ist, kann in günstiger Ausgestaltung des erfindungsgemäßen Schalldämpfers in dem Gehäuse ein Gerüst mit rechteckigem Querschnitt zur Befestigung der Kulissen eingebaut werden. Das Gerüst besteht vorzugsweise aus vier längs eingebauten rechteckigen Blechen und dient zur Befestigung der Kulissen. Sein Vorteil besteht darin, daß die Kulissen alle mit gleichen Abmessungen - und damit kostengünstig - gefertigt werden können.

Vorzugsweise ist in dem Zwischenraum zwischen Gehäuse und Gerüst eine Abschottung angeordnet. Diese Abdichtung verhindert, daß Fluid und vor allem Schall über dem Zwischenraum an dem schallabsorbierenden Innenraum des Gerüst vorbeiströmen. Das Fluid strömt also nur im Innenraum des Gerüsts.

Das Gehäuse des Schalldämpfers ist vorzugsweise im wesentlichen zylindersymmetrisch zu einer in Strömungsrichtung verlaufenden Achse ausgebildet und umfaßt Kulissen und Gerüst. Sein Innendurchmesser muß daher mindestens gleich der Querschnitts-Diagonalen des Gerüsts sein. Das Gehäuse dient als druckfester Außenmantel des Schalldämpfers. Das Gehäuse ist vorzugsweise akustisch abgeschottet vom kulissentragenden Gerüst.

In einer vorteilhaften Weiterbildung der Erfindung sind ebenfalls symmetrisch zu der Achse an den beiden Enden des Schalldämpfers ein Eintrittsstutzen und/oder ein Austrittsstutzen mit kreisförmigem Querschnitt angordnet, deren Durchmesser kleiner oder gleich der größeren Seitenlänge des rechteckigen Querschnitts des Gerüstes zur Befestigung der Kulissen ist.

Für den Übergang zwischen dem kreisförmigen und dem rechteckigen Querschnitt sind zwischen Eintrittsstutzen beziehungsweise Austrittsstutzen und Kulissen Übergangsleitbleche angeordnet.

Zur Optimierung der Schallabsorption kann es vorteilhaft sein, wenn eine Kulisse jeweils zwei übereinanderliegende gewellte Bleche mit verschiedenen Amplituden enthält. Selbstverständlich können auch mehr als zwei gewellte Bleche in einer Kulisse enthalten sein.

Die beiden übereinanderliegenden Bleche können beispielsweise die gleichen Abmessungen haben. Besonders günstig ist es jedoch, wenn die Wellungen der beiden übereinanderliegenden Bleche verschiedene Amplituden aufweisen. Durch entsprechende Abstimmung der Maße der gewellten Bleche, insbesondere der Amplitude der Wellungen, kann die Absorptionswirkung sehr flexibel an das Emissionsspektrum der Schallquelle angepaßt werden; es können auch mehrere Pegel spitzen bei verschiedenen Frequenzen bedämpft werden.

Dabei kann es günstig sein, wenn zwischen zwei benachbarten gewellten Blechen einer Kulisse ein Drahtgewebe angeordnet ist. Damit ergibt sich eine genau definierte und stabile Lage der Bleche relativ zum jeweils benachbarten Blech. Die akustische Durchlässigkeit zwischen den beiden Blechen wird nicht beeinträchtigt.

In der Regel weisen die Kulissen im wesentlichen die Form von langgezogenen, flachen Quadern auf. In günstiger Ausbildung der Erfindung ist jede Kulisse an genau einer Seitenfläche für das Fluid - und damit insbesondere für den Schall - durchlässig, wobei diese Seitenfläche parallel zur Strömungsrichtung und parallel zum Verlauf der Wellenberge und -täler des ihr benachbarten gewellten Blechs verläuft. Das Innere der Kulisse steht daher mit nur einem benachbarten Strömungskanal in Verbindung. Dabei kann jede Kulisse auch aus zwei oder mehr Abschnitten entlang der Achse des Gehäuses aufgebaut sein, wobei bei den in Achsrichtung hintereinander liegenden Abschnitten einer Kulisse die durchlässigen Flächen jeweils auf gegenüberliegenden Seiten angeordnet sind.

Zur Absorption besonders hoher Frequenzen kann die Kulisse auch beidseitig zur Strömung offene gewellte Bleche aufweisen. In diesem Fall ist inmitten der Kulisse ein Trennblech eingefügt, das den Durchgang der Schallwellen von einem durchströmten Spalt in den benachbarten verhindert.

Beim erfindungsgemäßen Schalldämpfer kann die Dämpfung im Strömungsraum so wirksam sein, daß die Körperschallängsleitung über das Gehäuse denjenigen Effekt darstellt, der die Gesamtdämpfung begrenzt. Die Körperschalleitung kann deutlich verringert werden, indem ein Dämpfungsmantel über das Gehäuse geklemmt wird.

Die Erfindung und weitere Einzelheiten der Erfindung werden im folgenden anhand einiger in den Zeichnungen dargestellten Ausführungsbeispiele näher erläutert. Es zeigen im einzelnen:

Figur 1     einen Längsschnitt des erfindungsgemäßen Schalldämpfers mit innerem Gerüst in Gesamtdarstellung, jedoch ohne Kulissen,

Figur 2     einen Querschnitt entlang Linie A-A von Figur 1,

Figur 3     einen detaillierteren Längsschnitt mit den eingebauten Kulissen,

Figur 4     das Detail D aus Figur 3,

Figur 5     eine andere Ausführungsform eines erfindungsgemäßen Schalldämpfers ohne Gerüst im Querschnitt,

Figur 6     einen Schalldämpfer ohne Gerüst im Längsschnitt,

Figur 7     eine beidseitig absorbierende Kulisse im Detail und

Figur 8     die Außenansicht einer Ausführungsvariante mit Dämpfungsmantel.

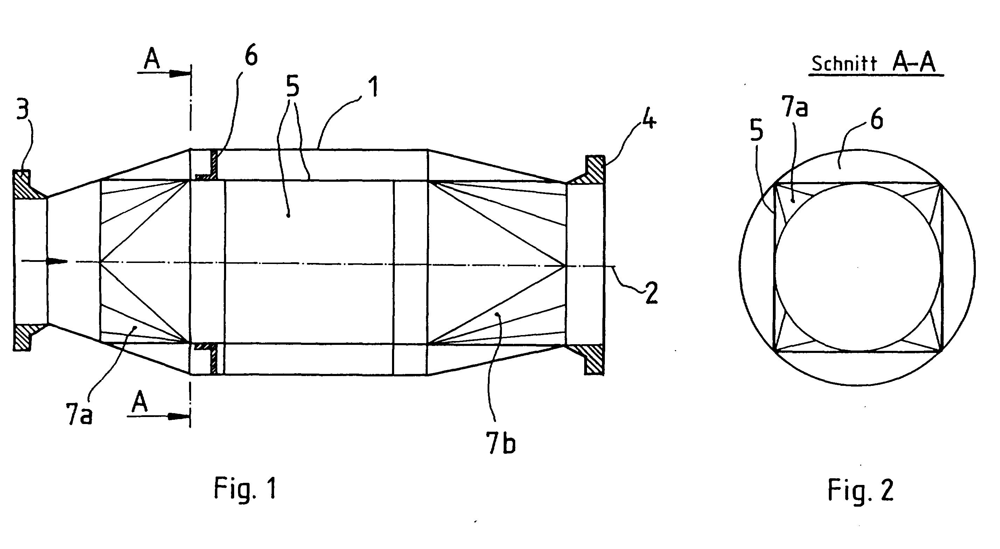

Aus den schematischen Zeichnungen der Figuren 1 und 2 ist der Grundaufbau des Schalldämpfers eines ersten Ausführungsbeispiels ersichtlich. Das Gehäuse 1 ist zylindersymmetrisch um eine Achse 2 aufgebaut und mit einem Eintrittsstutzen 3 und einem Austrittsstutzen 4 verbunden. Innerhalb des Gehäuses 1 ist ein Gerüst 5 eingebaut, das durch vier rechteckige, längs eingebaute Platten gebildet wird. In Figur 2 sind sämtliche vier Platten im Schnitt dargestellt; in Figur 1 sind zwei der Platten längs geschnitten und eine dazu senkrechte in Draufsicht erkennbar, die vierte Platte ist nicht sichtbar. Das Fluid strömt nur im Inneren des Gerüsts 5, der Zwischenraum zum Gehäuse 1 hat keine Funktion außer dem Übergang zur zylindermantelförmigen äußeren Hülle des Gehäuses 1, das die Druckfestigkeit des Schalldämpfers sicherstellt.

Die Diagonale des quadratischen Querschnitts des Gerüsts 5 ist bei dem Ausführungsbeispiel gleich dem Innendurchmesser des Gehäuses 1 gewählt. In anderen Fällen kann es auch vorteilhaft sein, die Diagonale etwas geringer zu bemessen. Die Durchmesser von Eintrittsstutzen 3 und Austrittsstutzen 4 sind ihrerseits kleiner oder gleich der Seitenlänge des quadratischen Querschnitts (= Plattenbreite) des Gerüsts 5, um die Strömung des Fluids durch den Schalldämpfer möglichst wenig zu behindern. Ein Übergang mit relativ niedrigem Strömungswiderstand zwischen den Stutzen 3, 4 mit kreisförmigem Querschnitt und dem Inneren des Schalldämpfers mit quadratischem Strömungsquerschnitt wird durch Übergangsleitbleche 7a, 7b gewährleistet. Damit der Schall nicht über den Zwischenraum zwischen Gerüst 5 und Gehäuse 1 die Absorptionsstrecke umgehen kann, ist eine Abschottung 6 notwendig, die eine Verbindung zwischen Gerüst und Gehäuse darstellt, die weder vom Fluid noch vom Schall durchströmt werden kann. Die Übergangsleitbleche 7a, 7b weisen Öffnungen auf, die den Druckausgleich zwischen dem Zwischenraum und dem Innenraum des Gerüsts 5 gewährleisten.

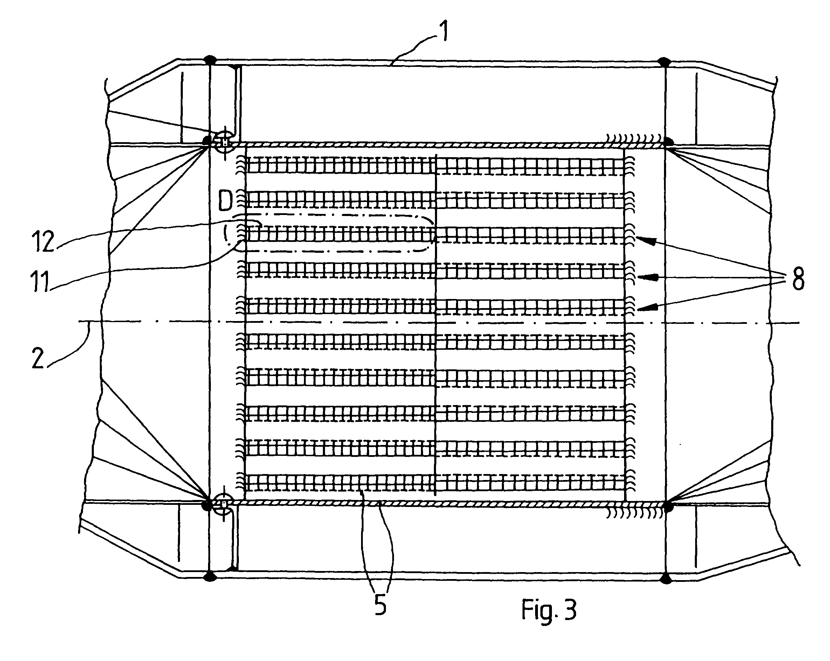

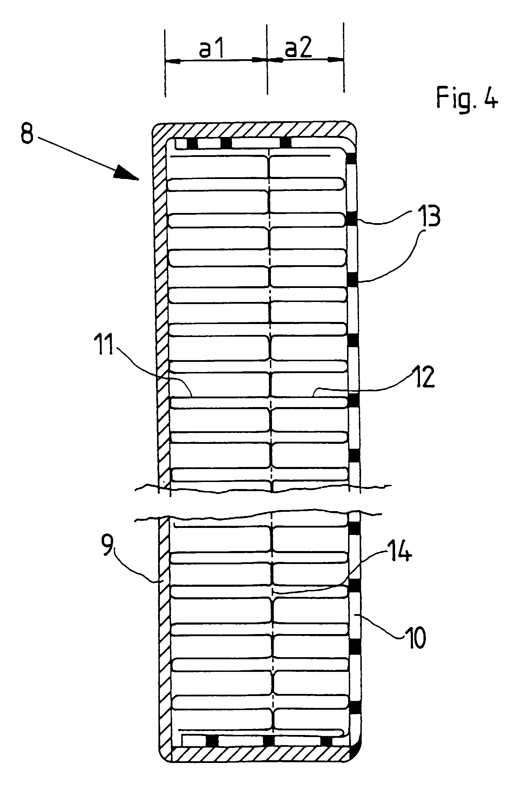

Figur 3 zeigt im Gegensatz zu den schematischen Darstellungen in den Figuren 1 und 2 auch die Kulissen 8, welche innerhalb des quadratischen Querschnitts des Gerüsts 5 angeordnet sind und die Schalldämpfung bewirken. Wie in der Detaildarstellung von Figur 4 zu erkennen ist, besteht eine Kulisse aus zwei planparallelen Deckplatten 9, 10, die - im vorliegenden Falle zwei - Schichten aus jeweils einem gewellten Blech 11, 12 einschließen. Es sind auch Kulissen mit einer oder mehr als zwei derartigen Schichten denkbar.

Bei den gewellten Blechen handelt es sich um Aluminium-Fins, wie sie aus dem Plattenwärmetauscherbau bekannt sind. Im Fall von geschnittenen Fins ist jedes der Bleche aus Streifen aufgebaut, die parallel zur Zeichenebene der Figur 4 verlaufen und deren Wellungen jeweils paarweise versetzt sind. Zwischen den Flanken zweier benachbarten Streifen befinden sich spaltförmige öffnungen, die eine akustische Verbindung zwischen den beiden Teilräumen oberhalb und unterhalb des Bleches darstellen. (In Figur 4 ist der Übersichtlichkeit halber ledlich ein Streifen dargestellt; die geschnittenen Flanken des benachbarten Streifens, die in der Ansicht eigentlich sichtbar sind, wurden nicht gezeichnet.)

Beim Einbau der beiden Bleche in eine Kulisse ist es wichtig, die Bleche so auszurichten, daß aus jeweils einem Wellental des einen Blechs und einem Wellenberg des darüberliegenden Blechs ein akustisch durchgehender Hohlraum gebildet wird, der sich im wesentlichen über die gesamte Dicke der Kulisse erstreckt.

Zwischen den gewellten Blechen 11, 12 ist ein Drahtgewebe 14 eingelegt, das die akustische Durchlässigkeit gewährleistet.

Die beiden gewellten Bleche 11, 12 im Ausführungsbeispiel haben verschiedene Wellenamplituden. Die Abstände zwischen Wellenbergen und -tälern betragen beispielsweise

$a_1 = 6,5$ mm und

$a_2 = 9,5$ mm.

Das Maxima der Schallabsorption liegt daher bei einer akustischen Wellenlänge von

$$4 \cdot (a_1 + a_2) = 64 \text{ mm}$$

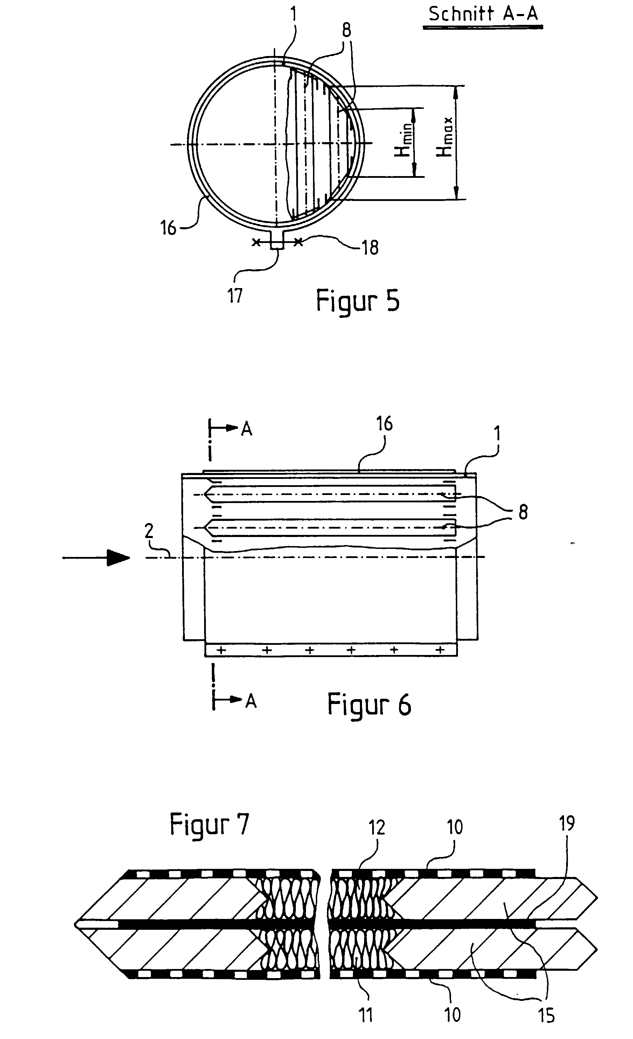

Durch Einbau von verschiedenen Fins mit entsprechenden Abmessungen kann das Absorptionsspektrum des Schalldämpfers sehr flexibel an den jeweiligen Einsatzzweck angepaßt werden. Es können auch mehrere Pegel spitzen gleichzeitig bedämpft werden, indem in Achsrichtung weitere entsprechend angepaßte Kulissen angeordnet oder beidseitig absorbierende Kulissen mit einem mittig angeordneten Trennblech (Figur 7) eingesetzt werden.

Beispielsweise können zwei oder mehrere in Strömungsrichtung hintereinander angeordnete Abschnitte des Schalldämpfers eingerichtet sein, wobei der erste Abschnitt beidseitig absorbierende Kulissen, die auf eine erste Schallwellenlänge abgestimmt sind, und der zweite Kulissen mit einem anderen Absorptionsmaximum aufweisen. Damit läßt sich das Absorptionsspektrum praktisch beliebig des speziellen Erfordernissen anpassen.

Die Kulissen 8 sind nach fast allen Seiten hin abgeschlossen. Nach einer Richtung (links in Figur 4) durch eine undurchlässige Deckplatte 9, zur Einströmseite und zur Ausströmseite hin (oben beziehungsweise unten in Figur 4) durch die umgekanteten Ränder der Deckplatte 9 und seitlich (senkrecht zur Zeichenebene der Figuren 3 und 4) durch die Platten des Gerüsts 5. Lediglich nach einer Seite hin besteht eine akustische Verbindung zu dem Raum zwischen den Kulissen 8, nämlich durch Öffnungen 13 in der Deckplatte 10. Zu diesem Zweck kann übliches Lochblech verwendet werden. Die freie Durchtrittsfläche sollte (bei einer Blechdicke von 1_mm) mindestens 30% betragen.

Die gelochten Deckplatten 10 (in Figur 3 gestrichelt dargestellt) sind bei senkrecht zur Strömungsrichtung benachbarten Kulissen 8 abwechselnd an verschiedenen Seiten (oben beziehungsweise unten in Figur 3) angeordnet. Auch in Strömungsrichtung weist jede einzelne Kulisse 8 zwei Abschnitte auf, bei denen sich die durchlässigen Flächen jeweils auf verschiedenen Seiten befinden. Dadurch sind Strömungskanäle gebildet, die jeweils auf ihrer halben Länge beidseitig in akustischer Verbindung zum Inneren der schallabsorbierenden Kulissen 8 stehen und im übrigen durch undurchlässige Deckplatten 9 scharf begrenzt sind.

Schalldämpfer, in denen kein Gerüst eingebaut ist, sind in den Figuren 5 (Querschnitt) und 6 (Längsschnitt) dargestellt. Die Kulissen 8, von denen zwei beispielhaft eingezeichnet sind, müssen entsprechend der Stelle ihres Einbaus in das Gehäuse 1 zugeschnitten werden. Entscheidende Parameter dafür sind die Höhen Hmin und Hmax der beiden Deckplatten einer Kulisse. Zur Verminderung des Strömungswiderstands können die Kulissen zum Strömungseintritt hin dachgiebelförmig auslaufen.

Der Aufbau einer beidseitig absorbierenden Kulisse aus zwei gelochten Deckplatten 10, gewellten Blechen 11, 12, einer Trennplatte 19 und Rahmenbändern 15 ist Figur 7 zu entnehmen. Zur Erzielung einer ausgezeichneten Festigkeit und Steifigkeit der Kulissen ist es von Vorteil, die gewellten Bleche 11, die gelochten Platten 10, eine gegebenenfalls notwendige Trennplatte 19 und die Rahmenbänder 15 (side-bars) untereinander zu verlöten.

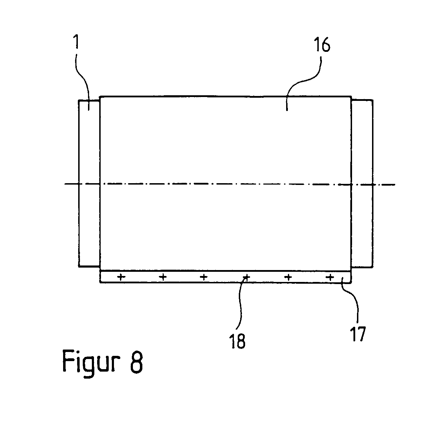

Bei hohen Absorptionswerten der Kulissen kann die Wirksamkeit der Schallminderung über den Schalldämpfer nicht voll zur Geltung kommen, weil die Körperschallängsleitung über das Gehäuse 1 zu hoch ist. Um dies zu verhindern, kann das Gehäuse mit einem Dämpfungsmantel (Figuren 5 und 8) umgeben werden. Dessen Wandstärke beträgt etwa das 0,2- bis 1,0-fache, vorzugsweise etwa die Hälfte derjenigen des Gehäuses 1. Er weist eine Flanschleiste 17 auf, mit welcher der Dämpfungsmantel 16 mittels Schrauben 18 am Gehäuse 1 festgeklemmt wird.

**Patentansprüche**

1. Schalldämpfer, der von einem Fluid durchströmt wird und ein Gehäuse (1) und schallabsorbierende Einbauten (8) aufweist, wobei die schallabsorbierenden Einbauten (8) gewellte Bleche (11, 12) enthalten, dadurch gekennzeichnet, daß mehrere schallabsorbierende Einbauten (8) in Strömungsrichtung angeordnet sind, und daß die gewellten Bleche (11, 12) aus geschnittenen parallelen Streifen gewellten Bleches bestehen, wobei die Wellungen zweier benachbarter Streifen paarweise versetzt sind, so daß sich zwischen den Flanken spaltförmige Öffnungen befinden, die eine akustische Verbindung zwischen den beiden Teilräumen oberhalb und unterhalb des Bleches darstellen.

2. Schalldämpfer nach Anspruch 1, dadurch gekennzeichnet, daß die gewellten Bleche (11, 12) so angeordnet sind, daß die Wellenberge und -täler im wesentlichen senkrecht zur Strömungsrichtung des Fluids verlaufen.

**3.** Schalldämpfer nach Anspruch 1 oder 2, dadurch gekennzeichnet, daß die Wellungen im wesentlichen Rechteckform aufweisen.

**4.** Schalldämpfer nach einem der Ansprüche 1 bis 3, dadurch gekennzeichnet, daß die Amplitude ($a_1/2$, $a_2/2$) der Wellen auf die Schallwellenlänge abgestimmt ist.

**5.** Schalldämpfer nach einem der Ansprüche 1 bis 4, dadurch gekennzeichnet, daß die gewellten Bleche (11, 12) innerhalb von ebenen Kulissen (8) angeordnet sind.

**6.** Schalldämpfer nach Anspruch 5, dadurch gekennzeichnet, daß eine Kulisse zwei Deckplatten (9, 10) aufweist, zwischen denen ein oder mehrere gewellte Bleche (11, 12) angeordnet sind.

**7.** Schalldämpfer nach Anspruch 6, dadurch gekennzeichnet, daß mindestens eine der beiden Deckplatten (10) einer Kulisse (8) Öffnungen aufweist.

**8.** Schalldämpfer nach Anspruch 6 oder 7, dadurch gekennzeichnet, daß zwischen den Deckplatten (10) einer Kulisse (8) zwei gewellte Bleche (11, 12) und zwischen den beiden gewellten Blechen (11, 12) einer Kulisse (8) eine im wesentlichen schallundurchlässige Trennplatte (19) angeordnet sind.

**9.** Schalldämpfer nach einem der Ansprüche 6 bis 8, dadurch gekennzeichnet, daß die beiden Deckplatten (9, 10) und das oder die gewellten Bleche (11, 12) einer Kulisse (8) miteinander verlötet sind.

**10.** Schalldämpfer nach einem der Ansprüche 5 bis 10, dadurch gekennzeichnet, daß in dem Gehäuse (1) ein Gerüst (5) mit rechteckigem Querschnitt zur Befestigung der Kulissen (8) eingebaut ist.

**11.** Schalldämpfer nach Anspruch 5, dadurch gekennzeichnet, daß in dem Zwischenraum zwischen Gehäuse (1) und Gerüst (5) eine Abschottung (6) angeordnet ist.

**12.** Schalldämpfer nach Anspruch 10 oder 11, dadurch gekennzeichnet, daß das Gehäuse (1) im wesentlichen zylindersymmetrisch zu einer in Strömungsrichtung verlaufenden Achse (2) ausgebildet ist.

**13.** Schalldämpfer nach einem der Ansprüche 10 bis 12, dadurch gekennzeichnet, daß der Eintrittsstutzen (3) und/oder der Austrittsstutzen (4) einen kreisförmigen Querschnitt mit einem Durchmesser aufweist, der kleiner oder gleich der größeren Seitenlänge des rechteckigen Querschnitts des Gerüstes (5) zur Befestigung der Kulissen (8) ist.

**14.** Schalldämpfer nach Anspruch 13, dadurch gekennzeichnet, daß zwischen Eintrittsstutzen (3) beziehungsweise Austrittsstutzen (4) und Kulissen (8) Übergangsleitbleche (7) angeordnet sind.

**15.** Schalldämpfer nach einem der Ansprüche 1 bis 9, dadurch gekennzeichnet, daß eine Kulisse (8) jeweils zwei übereinanderliegende gewellte Bleche (11, 12) enthält, die verschiedene Amplituden (a1/2, a2/2) aufweisen.

**16.** Schalldämpfer nach einem der Ansprüche 1 bis 15, dadurch gekennzeichnet, daß die Kulissen (8) im wesentlichen die Form von Quadern aufweisen und daß jede Kulisse (8) an mindestens einer Seitenfläche (10) für das Fluid durchlässig ist, wobei diese Seitenfläche (10) parallel zur Strömungsrichtung und parallel zum Verlauf der Wellenberge und -täler des ihr benachbarten gewellten Blechs (12) verläuft.

**17.** Schalldämpfer nach einem der Ansprüche 1 bis 16, dadurch gekennzeichnet, daß ein Dämpfungsmantel (16) über das Gehäuse (1) geklemmt ist.

**18.** Anwendung des Schalldämpfers nach einem der Ansprüche 1 bis 17 am Eintritt und/oder Austritt einer Entspannungsturbine und/oder eines Verdichters einer verfahrenstechnischen Anlage.

**19.** Anwendung des Schalldämpfers nach einem der Ansprüche 1 bis 17 am Eintritt und/oder Austritt einer Entspannungsturbine und/oder eines Verdichters einer Tieftemperatur-Luftzerlegungsanlage.

**20.** Verfahren zur Herstellung eines Schalldämpfers gemäß einem der Ansprüche 1 bis 17, bei dem eine Kulisse durch Verlöten zweier Deckplatten mit mindestens einem dazwischenliegenden gewellten Blech, wobei das gewellte Blech aus geschnitten parallelen Streifen gewellten Bleches besteht, wobei die Wellungen zweier benachbarten Streifen paarweise versetzt sind, so daß sich zwischen den Flanken spaltförmige Öffnungen befinden, die eine akustische Verbindung zwischen den beiden Teilräumen oberhalb und unterhalb des Bleches darstellen, erzeugt wird.

**Claims**

**1.** Silencer through which a fluid flows and which has a casing (1) and sound-absorbing inserts (8), the sound-absorbing inserts (8) containing corrugated metal sheets (11, 12), characterized in that a plurality of sound-absorbing inserts (8) is arranged in the direction of flow, and in that the corrugated sheets (11, 12) comprise cut parallel strips of corrugated metal sheet, the corrugations of two adjacent strips being offset in pairs, with the result that there are between the flanks cap-shaped openings which represent an acoustic connection between the two part-spaces above and below the metal sheet.

2. Silencer according to Claim 1, characterized in that the corrugated metal sheets (11, 12) are arranged in such a way that the peaks and troughs of the corrugations extend essentially perpendicular to the direction of flow of the fluid.

3. Silencer according to Claim 1 or 2, characterized in that the corrugations have an essentially rectangular shape.

4. Silencer according to one of Claims 1 to 3, characterized in that the amplitude ($a_1/2$, $a_2/2$) of the corrugations is matched to the soundwave length.

5. Silencer according to one of Claims 1 to 4, characterized in that the corrugated metal sheets (11, 12) are arranged within planar guides (8).

6. Silencer according to Claim 5, characterized in that one guide has two cover plates (9, 10), between which one or more corrugated metal sheets (11, 12) are arranged.

7. Silencer according to Claim 6, characterized in that at least one of the two cover plates (10) of a guide (8) has openings.

8. Silencer according to Claim 6 or 7, characterized in that two corrugated metal sheets (11, 12) are arranged between the cover plates (10) of a guide (8), and a dividing plate (19) which is essentially impermeable to sound is arranged between the two corrugated metal sheets (11, 12) of a guide (8).

9. Silencer according to one of Claims 6 to 8, characterized in that the two cover plates (9, 10) and the corrugated metal sheet or sheets (11, 12) of a guide (8) are soldered to one another.

10. Silencer according to one of Claims 5 to 10, characterized in that a frame (5) of rectangular cross section is fitted in the casing (1) for the purpose of fixing the guides (8).

11. Silencer according to Claim 5, characterized in that a partition (6) is arranged in the interspace between the casing (1) and the frame (5).

12. Silencer according to Claim 10 or 11, characterized in that the casing (1) is essentially cylinder-symmetrical with respect to an axis (2) extending in the direction of flow.

13. Silencer according to one of Claims 10 to 12, characterized in that the inlet stub (3) and/or the outlet stub (4) have a circular cross section with a diameter which is smaller or equal to the greater side length of the rectangular cross section of the frame (5) for fixing the guides (8).

14. Silencer according to Claim 13, characterized in that transition baffles (7) are arranged between the inlet stub (3) and the guides (8) and the outlet stub (4) and the guides (8).

15. Silencer according to one of Claims 1 to 9, characterized in that a guide (8) has in each case two corrugated metal sheets (11, 12) one above the other which have different amplitudes (a1/2, a2/2).

16. Silencer according to one of Claims 1 to 15, characterized in that the guides (8) have essentially the form of cuboids and in that each guide (8) allows fluid through at least one side face (10), this side face (10) extending parallel to the direction of flow and parallel to the course of the peaks and troughs of the corrugations of the corrugated metal sheet (12) adjacent to it.

17. Silencer according to one of Claims 1 to 16, characterized in that a damping shell (16) is clamped over the casing (1).

18. Use of the silencer according to one of Claims 1 to 17, at the inlet and/or outlet of an expansion turbine and/or a compressor of a process-engineering plant.

19. Use of the silencer according to one of Claims 1 to 17, at the inlet and/or outlet of an expansion turbine and/or a compressor of a low-temperature air separation plant.

20. Method for producing a silencer according to one of Claims 1 to 17, in which a guide is produced by soldering two cover plates to at least one corrugated metal sheet situated between them, the corrugated metal sheet comprising cut parallel strips of corrugated metal sheet, the corrugations of two adjacent strips being offset in pairs, with the result that there are between the flanks cap-shaped openings which represent an acoustic connection between the two part-spaces above and below the metal sheet.

**Revendications**

1. Silencieux, qui est parcouru par un fluide et présente un boîtier (1) et des éléments à absorption acoustique (8), dans lequel les éléments à absorption acoustique (8) comportent des tôles ondulées (11, 12), caractérisé en ce que plusieurs éléments à absorption acoustique (8) sont disposés dans la direction de l'écoulement, et en ce que les tôles ondulées (11, 12) se composent de bandes de tôle ondulée parallèles découpées, les ondulations de deux bandes voisines étant décalées par paires, de sorte qu'il se trouve, entre les flancs, des ouvertures en forme de fentes, qui représentent une communication acoustique entre les deux volumes partiels au-dessus et en dessous de la tôle.

2. Silencieux suivant la revendication 1, caractérisé en ce que les tôles ondulées (11, 12) sont disposées d'une façon telle que les crêtes et les vallées des ondes soient orientées essentiellement perpendiculairement à la direction d'écoulement du fluide.

3. Silencieux suivant la revendication 1 ou 2, caractérisé en ce que les ondulations présentent une forme essentiellement rectangulaire.

4. Silencieux suivant l'une quelconque des revendications 1 à 3, caractérisé en ce que l'amplitude ($a_1/2$, $a_2/2$) des ondes est accordée à la longueur d'onde du son.

5. Silencieux suivant l'une quelconque des revendications 1 à 4, caractérisé en ce que les tôles ondulées (11, 12) sont disposées à l'intérieur de coulisses planes (8).

6. Silencieux suivant la revendication 5, caractérisé en ce qu'une coulisse présente deux plaques de recouvrement (9, 10), entre lesquelles une ou plusieurs tôles ondulées (11, 12) sont disposées.

7. Silencieux suivant la revendication 6, caractérisé en ce qu'au moins une des deux plaques de recouvrement (10) d'une coulisse (8) présente des ouvertures.

8. Silencieux suivant la revendication 6 ou 7, caractérisé en ce que deux tôles ondulées (11, 12) sont disposées entre les plaques de recouvrement (10) d'une coulisse (8) et une plaque de séparation (19) empêchant sensiblement la transmission du son est disposée entre les deux tôles ondulées (11, 12) d'une coulisse (8).

9. Silencieux suivant l'une quelconque des revendications 6 à 8, caractérisé en ce que les deux plaques de recouvrement (9, 10) et la ou les tôle(s) ondulée(s) (11, 12) d'une coulisse (8) sont brasées les unes aux autres.

10. Silencieux suivant l'une quelconque des revendications 5 à 10, caractérisé en ce qu'un châssis (5) de section transversale rectangulaire est monté dans le boîtier (1) pour la fixation des coulisses (8).

11. Silencieux suivant la revendication 5, caractérisé en ce qu'une paroi de séparation (6) est disposée dans l'espace intermédiaire entre le boîtier (1) et le châssis (5).

12. Silencieux suivant la revendication 10 ou 11, caractérisé en ce que le boîtier (1) a une forme cylindrique sensiblement symétrique par rapport à un axe (2) orienté dans la direction de l'écoulement.

13. Silencieux suivant l'une quelconque des revendications 10 à 12, caractérisé en ce que l'embout d'entrée (3) et/ou l'embout de sortie (4) présente une section transversale circulaire avec un diamètre qui est plus petit ou égal à la plus grande longueur d'un côté de la section transversale rectangulaire du châssis (5) pour la fixation des coulisses (8).

14. Silencieux suivant la revendication 13, caractérisé en ce que des chicanes de transition (7) sont disposées entre l'embout d'entrée (3), respectivement l'embout de sortie (4), et les coulisses (8).

15. Silencieux suivant l'une quelconque des revendications 1 à 9, caractérisé en ce qu'une coulisse (8) comporte chaque fois deux tôles ondulées (11, 12) superposées, qui présentent des amplitudes (a1/2, a2/2) différentes.

16. Silencieux suivant l'une quelconque des revendications 1 à 15, caractérisé en ce que les coulisses (8) présentent essentiellement la forme de carrés et en ce que chaque coulisse (8) est perméable au fluide au moins dans une face latérale (10), cette face latérale (10) étant orientée parallèlement à la direction d'écoulement et parallèlement à l'orientation des crêtes et des vallées de la tôle ondulée (12) dont elle est voisine.

17. Silencieux suivant l'une quelconque des revendications 1 à 16, caractérisé en ce qu'une chemise d'amortissement (16) est pincée sur le boîtier (1).

18. Utilisation du silencieux suivant l'une quelconque des revendications 1 à 17 à l'entrée et/ou à la sortie d'une turbine de détente et/ou d'un compresseur d'une installation technologique.

19. Utilisation du silencieux suivant l'une quelconque des revendications 1 à 17 à l'entrée et/ou à la sortie d'une turbine de détente et/ou d'un compresseur d'une installation de séparation de l'air à basse température.

20. Procédé pour la fabrication d'un silencieux suivant l'une quelconque des revendications 1 à 17, dans lequel on réalise une coulisse par brasage de deux plaques de recouvrement avec au moins une tôle ondulée disposée entre elles, la tôle ondulée se composant de bandes de tôle ondulée parallèles découpées, les ondulations de deux bandes voisines étant décalées par paires, de telle façon qu'il se trouve entre les flancs des ouvertures en forme de fentes, qui représentent une communication acoustique entre les deux espaces partiels au-dessus et en dessous de la tôle.

Fig. 1

Fig. 2

EP 0 605 542 B1

Fig. 3

a1    a2

Fig. 4

8

13

11

12

9

14

10

Schnitt A-A

Figur 5

Figur 6

Figur 7

Figur 8